# EUROPÄISCHE PATENTSCHRIFT

(11) **EP 1 327 592 B1**
(45) Veröffentlichungstag und Bekanntmachung des Hinweises auf die Patenterteilung: **07.10.2009**
(21) Anmeldenummer: 03450002.5
(22) Anmeldetag: 02.01.2003
(51) Int. Cl.: B65G 69/18, B65G 49/04, B65G 17/20

(54) **Verdrängungskörper für Gehänge eines Transportsystems**
Corps de déplacement pour balancelles d'un transporteur
Displacement body for hanging devices of a conveyor

(30) Priorität: 09.01.2002 AT 292002
(43) Veröffentlichungstag der Anmeldung: 16.07.2003
(73) Patentinhaber: KÖRNER CHEMIEANLAGENBAU GESELLSCHAFT M.B.H., A-8551 Wies (AT)
(72) Erfinder: Nerat, Friedrich. Dipl.-Ing.,, 8047 Graz (AT)
(74) Vertreter: Patentanwälte BARGER, PISO & PARTNER

(56) Entgegenhaltungen:
- GB-A- 723 734
- GB-A- 737 449
- US-A- 3 418 756
- US-A- 3 446 539
- US-A- 4 625 132

## Beschreibung

Die Erfindung betrifft einen Verdrängungskörper entsprechend dem einleitenden Teil des Anspruches 1, wie er aus der GB 723,734, bekannt ist. Diese Druckschrift offenbart, dass der Verdrängungskörper in Schnitten parallel zur Decke spindelförmig ausgebildet sein soll, um die Undichtigkeiten zwischen der elastischen Dichtung und dem Spindelkörper in dessen Front- und Heckbereich möglichst zu reduzieren.

Dazu ist folgendes auszuführen: Es ist im Zuge der industriellen Fertigung sehr oft notwendig, die Oberfläche der Gegenstände im Zuge von deren Fertigung zu behandeln.

Diese Bearbeitung findet im großtechnischen Maßstab, aber oft auch im handwerklichen Umfang, in sogenannten Einhausungen statt, durch die verhindert wird, daß aggressive Medien unkontrolliert von der Bearbeitungsstelle in die Umgebung entweichen. Darüber hinaus ist diese Einhausung oft auch günstig oder sogar notwendig, um bestimmte Betriebsbedingungen (Zusammensetzung, Atmosphäre, Aufrechterhaltung einer vorgegebenen Temperatur etc.) zu erreichen bzw. ökonomisch sinnvoll zu erreichen.

Bei diesem Arbeiten innerhalb einer Einhausung werden die zu behandelnden Güter durch ein Transportsystem an der zumindest einen Bearbeitungsstation vorbeigeführt, in der Praxis sind es meist eine Vielzahl von Bearbeitungsstationen, da ja oft zuerst die Oberfläche der zu bearbeitenden Gegenstände gereinigt, vorbereitet, behandelt und auf die eine oder andere Weise konserviert wird, bevor der Gegenstand die Einhausung wieder verläßt. Dieser Transport innerhalb der Einhausung kann nun so erfolgen, daß das Transportsystem sich im Inneren der Einhausung befindet, doch ist dies aus wirtschaftlichen Gründen nicht sinnvoll (hohe Instandhaltungskosten durch Korrosion). Die Einhausung bewirkt, daß korrosive oder sonst aggressive und gefährliche Medien unter Verschluß gehalten werden. Derartige Medien wären nun in der Lage ein Transportsystem, das ja Rollen, Bahnen, Tragrollen, Zugmittel, bewegliche Teile, Datenleitungen etc. aufweist, in kürzester Zeit zu beschädigen oder gar zu zerstören. Man geht daher so vor, daß das eigentliche Transportsystem sich oberhalb der Decke der Einhausung befindet und das zu behandelnde Gut an Gehängen angeordnet ist, die durch möglichst schmale Schlitze in der Decke (die eigentlich nur eine mediendichte Zwischendecke ist) geführt werden. In den meisten Fällen sind nun die Gehänge nicht einfach Stangen oder Ketten od. dgl., sondern relativ komplizierte Gebilde, um die an ihnen hängenden Gegenstände zumindest heben und senken zu können und sie so den einzelnen Bearbeitungsstationen in bestmöglicher Lage und Positionierung zuführen zu können.

Um nun die Schlitze in der Decke der Einhausung möglichst gut abzudichten, ist es im Stand der Technik bekannt, zu beiden Seiten dieser Schlitze Bürsten oder elastische Dichtlippen anzubringen, deren Breite, quer zur Schlitzlängsachse größer ist als die Schlitzbreite, so daß die Dichtungen nach Art einer Dichtlippe durch die elastische Deformation gegeneinander gepreßt werden und so eine gute Spaltabdichtung ermöglichen.

Aus diesem Grund ist es aus dem Stand der Technik bekannt, die Gehänge für eine Last (sei es eine Einzellast) oder mehrere in einem Korb oder an einer eigenen Traverse angebrachte Lasten durch einen Verdrängungskörper zu führen, der selbständig auf konstanter Höhe, nämlich der Höhe der Dichtung bzw. der Decke der Einhausung gehalten wird und der vertikale Durchlässe aufweist, die so dimensioniert sind, daß sie einer eventuellen Bewegung des Gehänges nicht im Wege stehen. Diese Verdrängungskörper weisen in Querschnitten parallel zur Decke der Einhausung im allgemeinen längsrechteckigen Querschnitt auf, wobei die beiden Spitzen, Bug vorne und Heck hinten abgerundet verlaufen. In Vertikalschnitten normal zur Decke der Einhausung und normal zur Längsrichtung der Laufbahn (auch wenn diese geradlinig verläuft) sind die Verdrängungskörper des Standes der Technik im allgemeinen geradlinig begrenzt. Es stellen diese Verdrängungskörper somit von geringfügigen Abweichungen abgesehen, zylindrische Körper im Sinne der theoretischen darstellenden Geometrie dar: Ihre Oberfläche wird von einer geschlossenen Kurve und durch sie gehende, zueinander parallele Geraden grenzt.

Es wurde nun im Zuge der fortschreitenden Verbesserungen der Einhausungen und der Bemühungen um möglichst gute Abdichtungen der Einhausungen festgestellt, daß trotz all dieser Maßnahmen ein bedeutender Teil der Undichtigkeit auf diese Konstruktion fällt. Man muß hier noch erwähnen, daß aus Gründen der Sicherheit und des Umweltschutzes die Einhausungen im allgemeinen unter einem gewissen Unterdruck im Vergleich zur umgebenden Atmosphäre gehalten werden, um das ungewollte Entweichen jedweden Mediums aus dem Inneren der Einhausung zuverlässig zu verhindern. Es wird dieser Unterdruck durch entsprechende Saugzüge und Gebläse erreicht, das abgezogene Gas wird durch entsprechende Wäscher und Filter geführt und gelangt somit gereinigt und neutralisiert in die Umgebung. Nun ist durch die Kosten des dabei verlorengehenden Betriebsmittels und durch die zumeist dabei auch verlorengehende thermische Energie, die meisten Behandlungen von Oberflächen von Gegenständen finden bei erhöhter Temperatur statt, eine imperative Forderung, diese Verluste möglichst klein zu halten. Ein weiterer Grund für die bestmögliche Abdichtung besteht darin, daß ein ausreichender Unterdruck bei geringsmöglichen Absaugmengen erreicht wird.

Dies ist nun das Ziel der vorliegenden Erfindung: Es sollen die im Bereich der Spalten, durch die die Gehänge bei den eingangs genannten Anlagen treten, deutlich verkleinert werden.

Erfindungsgemäß erreicht man dies durch einen Verdrängungskörper gemäß Anspruch 1.

Unter spindelförmig im Sinne der Erfindung wird in dieser Beschreibung und den Ansprüchen jede Form einer Fläche verstanden, die längliche Form aufweist, in ihrem mittleren Bereich im wesentlichen von zwei zueinander parallelen Abschnitten begrenzt ist und ihren beiden Endbereichen im Rahmen des technisch möglichen spitz zuläuft. Besonders bevorzugt werden dabei Querschnittsformen, die zumindest im Bereich des Buges und/oder Heckes geschwungen (ohne Ecken, beispielsweise stetig differenzierbar) verlaufen und auf jeder so geschwungen verlaufenden Seite in ihrer Kontur einen Wendepunkt aufweisen.

Erfindungsgemäß weist der Verdrängungskörper im Schnitt normal zur Längsachse der Spindel im Kontaktbereich mit der Dichtung, einen im wesentlichen trapezförmigen Querschnitt auf, wobei bevorzugt die schrägen Trapezseiten konkav ausgebildet sind.

Durch beide Maßnahmen erreicht man eine jeweils deutlich verbesserte Anpassung der Form des Verdrängungskörpers an die elastische Deformation der Dichtung: Die spindelartige Ausbildung des horizontalen Querschnittes erlaubt eine weitgehende Abdichtung der beiden Zwickel, der sich vor dem Verdrängungskörper öffnenden und hinter dem Verdrängungskörper wieder schließenden Dichtlippe und die Ausgestaltung des vertikalen Querschnittes erlaubt ein großflächiges und daher dichtes, aber mit geringer Flächenpressung erfolgendes Anliegen der Dichtung am Verdrängungskörper, so daß die reibende Beanspruchung durch die Dichtung und auch der Dichtung deutlich herabgesetzt wird. Dazu kommt, daß es in diesem Falle möglich ist, die reibende Beanspruchung zwischen Dichtung und Verdrängungskörper in einen Bereich der Dichtung zu verlagern, der bei der Abdichtung des Spaltes zwischen den beiden Dichtungen, somit zwischen aufeinanderfolgenden Verdrängungskörpern nicht beteiligt ist, so daß diese heikle Dichtlippe durch den erfindungsgemäßen Verdrängungskörper nicht beschädigt wird.

Die Erfindung wird im folgenden anhand der Zeichnung näher erläutert. Dabei zeigt
die Fig. 1 rein schematisch die Situation im oberen Bereich einer Einhausung, wobei auf die Darstellung eines Verdrängungskörpers aus Gründen der Übersichtlichkeit verzichtet wurde,
die Fig. 2 einen Schnitt entlang der Ebene II-II der Fig. 3 mit einem erfindungsgemäßen Verdrängungskörper,
die Fig. 3 die Situation der Fig. 2 im Schnitt der Fig. 1 in vergrößertem Maßstab und
die Fig. 4 eine Ausführungsform eines erfindungsgemäßen Verdrängungskörpers in pesrpektivischer Ansicht.

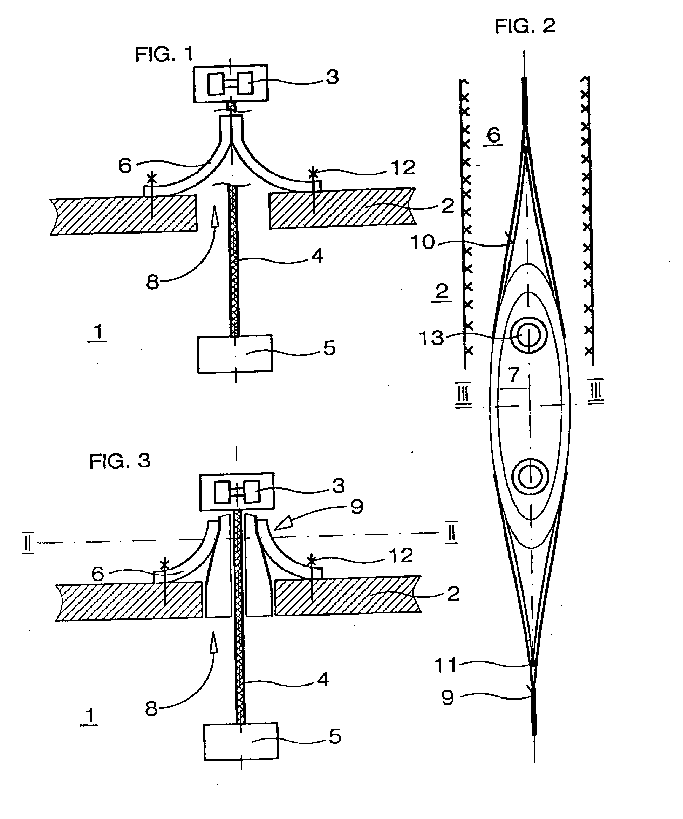

Fig. 1 stellt den oberen Bereich einer Einhausung 1 mit deren Decke 2 dar. In der Decke 2 ist ein Spalt 8 und oberhalb des Spaltes 8 verläuft, zumeist mäandrierend über die Grundfläche der Einhausung verlaufend, eine Laufbahn 3 mit entsprechenden Antriebs- und Steuermittel für Gehänge 4. Am unteren Ende der Gehänge 4 befindet sich die Last 5, deren Oberfläche zu bearbeiten ist oder die Gegenstände trägt, deren Oberfläche zu bearbeiten ist.

Zur Abdeckung des Spaltes 8 ist eine im dargestellten Ausführungsbeispiel symmetrisch ausgebildete elastische Dichtung 6 vorgesehen, die durch passende Befestigungsmittel 12 zu beiden Seiten des Spaltes 8 montiert ist und elastisch deformiert wird, so daß sie nach oben ragt, wo die Dichtlippen 9 (Fig. 3) aneinander zu liegen kommen und so für eine Abdichtung des Spaltes 8 sorgen. Eine nach unten gerichtete Dichtlippe wäre ebenfalls denkbar.

In Fig. 1 ist, wie bereits kurz erwähnt, das Gehänge 4 ohne Verdrängungskörper dargestellt und auch ohne die Dichtung 6 beim Durchtritt zu deformieren, es handelt sich um eine rein schematische Darstellung. Man könnte es auch als versetzten Schnitt ansehen: Im oberen und unteren Teil im Bereich eines Gehänges, im mittleren Teil mit der Dichtung 6 außerhalb des Bereiches eines Gehänges.

Die Fig. 2 zeigt nun in einem Schnitt entlang der Linie II-II der Fig. 3 die Situation im Bereich eines erfindungsgemäß ausgebildeten Verdrängungskörpers 7. Der Verdrängungskörper 7 ist in seinem Dichtungsbereich, d.h. in dem Bereich, in dem die Dichtung 6 an ihm anliegt, eine im wesentlichen schmalelliptische oder längsrechteckige Form auf, die spindelförmig ausgebildet ist, d.h. er weist in Richtung seiner Bewegung, somit in Richtung der Laufbahn 3, diese Richtung ist strichpunktiert in Fig. 2 angedeutet, an seinem vorderen und hinteren Ende jeweils eine Spitze 11 auf und damit einen Querschnitt, der die Ausbildung von Zwickeln weitestgehend unterbindet. Die Kontaktlinie zwischen der Dichtung 6 und dem Verdrängungskörper ist durch die Linie 10 angedeutet, die elliptischen Linien innerhalb dieser Kontaktlinie deuten die Ausdehnung des Verdrängungskörpers 7 oberhalb des Dichtungsbereiches an.

Im Stand der Technik weisen die Verdrängungskörper auch im Dichtungsbereich eine derartige elliptische Form auf, während die Dichtung zufolge ihrer Steifigkeit im wesentlichen der Linie 10 folgt. Es kommt daher, wie leicht ersichtlich ist, zur Ausbildung von offenen Zwickeln vor und hinter dem Verdrängungskörper durch die Luft in die Einhausung gesaugt wird.

Um ausreichend mechanisch stabil zu sein und um die Dichtung 6 bzw. die Dichtlippe 9 beim "Aufschneiden" nicht zu beschädigen, ist natürlich die Spitze 11 nicht im geometrischen oder mathematischen Sinn als singulärer Punkt zu verstehen, sondern als Ausbildung einer schmal zulaufenden Fläche mit geringer Abrundung oder Anfasung im Spitzenbereich.

Der Fig. 2 sind auch die Durchlässe 13 für das eigentliche Gehänge 4 zu entnehmen, der Verdrängungskörper 7 wird, wie bereits im Stand der Technik, für sich geführt, so daß die Kräfte beim Aufschneiden der Dichtung 6 und die Reibungskräfte während der Bewegung nicht auf das Gehänge 4 übertragen werden.

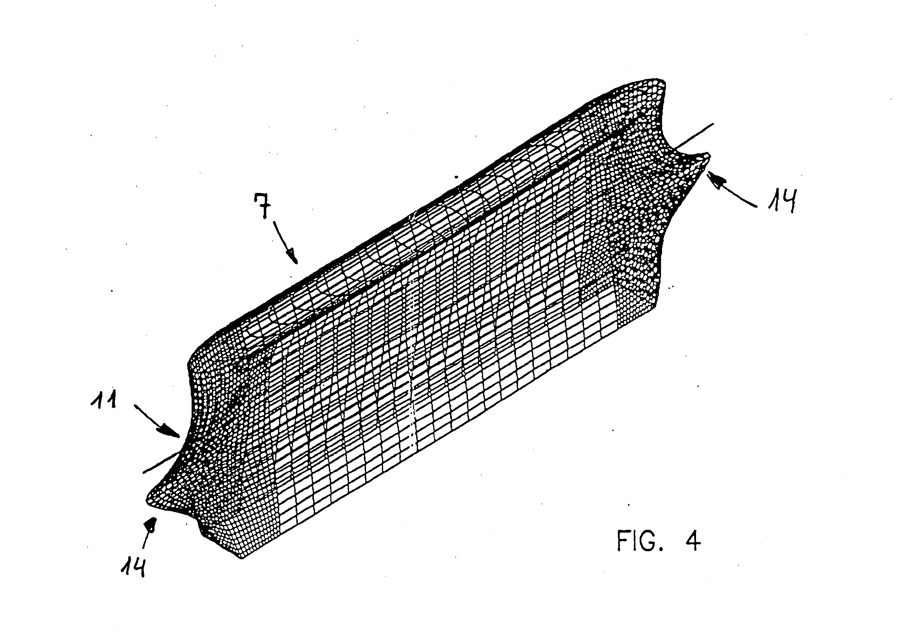

Im Bug- und Heckbereich des Verdrängungskörpers ist es, wie in Fig. 4 gezeigt, vorteilhaft, eine Art Wulstbug wie bei einem Schiff auszubilden, so daß die Dichtlippen 9 nicht so sehr aufgeschnitten werden wie beim Stand der Technik, sondern durch Anheben eines Bereiches der Dichtung 6, der im Abstand von den Dichtlippen 9 liegt, angehoben und so voneinander getrennt werden.

Die Fig. 3 zeigt nun in vergrößerter und etwas realistischer Darstellung, aber letztlich noch immer schematisch, die Situation der Fig. 1 beim Durchtritt eines Verdrängungskörpers: Der Verdrängungskörper 7 ist im Bereich des Durchtrittes durch die Decke 2 und insbesondere im Bereich des Kontaktes mit der Dichtung 6 (Dichtungsbereich) mit einer gekrümmten Fläche ausgebildet, die der natürlichen Krümmung der Dichtlippe nachempfunden ist, was zu einer flächiger ausgebildeten Berührungszone zwischen der Dichtung 6 und der äußeren Oberfläche des Verdrängungskörpers 7 führt, wodurch beide Teile schon wegen des verringerten Anpreßdruckes geschont werden.

Im dargestellten Ausführungsbeispiel weist der Querschnitt des Verdrängungskörpers 7 einen Wendepunkt auf und die Hauptberührungsfläche zwischen der Dichtung 6 und dem Verdrängungskörper 7 liegt im darunterliegenden konvexen Bereich des Umrisses des Verdrängungskörpers 7, so daß der Bereich der Dichtlippe 9 nicht oder kaum in Berührung mit dem Verdrängungskörper 7 kommt. Auf diese Weise wird inbesondere der Bereich der Dichtlippe 9 wirksam vor Verschleiß geschont und die Dichtwirkung zwischen den beiden Dichtlippen in den Bereichen des Spaltes 8, in denen sich gerade kein Verdrängungskörper befindet, ist besonders gut.

Gleichermaßen ist in Fig. 2 der bevorzugte Fall dargestellt, in dem der horizontale Querschnitt des Verdrängungskörpers 7 einen Wendepunkt aufweist, der bevorzugt in dem Bereich liegt, in dem sich auch beim Verdrängungskörper gemäß dem Stand der Technik im Verlauf der Dichtlippe ebenfalls ein Wendepunkt zufolge der elastischen Verhältnisse ausgebildet hat.

Die Erfindung ist nicht auf das dargestellte Ausführungsbeispiel beschränkt, sondern kann verschiedentlich abgewandelt und adaptiert werden. So ist es insbesondere möglich, im Bereich des Verdrängungskörpers, der mit der Dichtung 6 in Berührung kommt, eine Art Scheuerleiste vorzusehen, so daß bei Abnutzung des Verdrängungskörpers in diesem Bereich der Verdrängungskörper nicht als Ganzes ersetzt werden muß, sondern nur die Scheuerleiste. Es ist möglich, den Verdrängungskörper an seiner Vorderseite anders als an seiner Heckseite auszugestalten, wenn dies auch wegen der im allgemeinen geringen Geschwindigkeiten und der homogenen Dichtungen 6 nur aus organisatorischen Gründen (Kennzeichnung des Frontteiles) sinnhaft sein dürfte. Als Material für den Verdrängungskörper können alle bei herkömmlichen Verdrängungskörper verwendeten Stoffe und Materialien verwendet werden, es ist aber auch möglich, durch die Verwendung von Scheuerleisten für den Verdrängungskörper selbst besonders leichte und u.U. chemisch widerstandsfähige Materialien zu verwenden, da der Körper des Verdrängungskörpers nicht mehr auf Abrieb beansprucht wird.

Zu den Darstellungen soll noch bemerkt werden, daß natürlich bei genauer Betrachtung durch die unterschiedliche Deformation der Dichtung 6, insbesondere im Mittelbereich des Verdrängungskörpers, wie die Fig. 3 zeigt, die Höhe der Dichtlippe, gemessen von der Ebene ihrer Befestigung am oberen Bereich der Decke der Einhausung, je nach ihrem Auseinanderspreizen (Aufschneiden) durch den Verdrängungskörper mehr oder weniger ansteigt.

Die Form des erfindungsgemäßen Verdrängungskörpers in Schnitten parallel zu dem der Fig. 3 kann natürlich von dem der Fig. 3 abweichen, durch das immer schmäler werden des Verdrängungskörpers zum Bug und zum Heck hin, ändert sich auch die Höhe des Bereiches, in dem es zum Kontakt zwischen der Dichtung und dem Verdrängungskörper kommt.

Es ist selbstverständlich die Anbringung der Dichtlippe nach unten möglich, dadurch ändert sich an der Form und Ausbildung des erfindungsgemäßen Verdrängungskörper nichts, es ist nur sein eigentlicher Funktionsbereich (Kontakt mit der Dichtlippe und Anpassung an deren Form) "spiegelbildlich" nach unten statt nach oben vorzusehen.

In der Fig. 3 ist fällt das untere Ende des Verdrängungskörpers mit der Ebene der Decke 2 praktisch zusammen, das muß selbstverständlich nicht so sein, eine Weiterführung in gleicher der auch anderer Stärke quer zur Laufbahn 3 ist möglich. Eine Anpassung der Form des Verdrängungskörpers an asymmetrische Dichtungen ist in Kenntnis der Erfindung für den Fachmann auf diesem Gebiet leicht möglich. So sehr man auf all diese Besonderheiten Rücksicht nehmen kann, ist doch das weiter oben Gesagte, die spindelförmige Ausbildung in der Horizontalen und die trapezförmige Ausbildung in der Vertikalen und in weiteren Ausgestaltungen das Vorsehen der Wendepunkte, der Kern der Erfindung.

## Patentansprüche

1. Verdrängungskörper für Gehänge (4) eines Transportsystems für Lasten (5), die in eingehausten Anlagen an ihrer Oberfläche behandelt werden, wobei die Gehänge durch einen mit zumindest einer elastischen Dichtung (6) versehenen Schlitz (8) in der Decke (2) der Einhausung (1) mittels des Verdrängungskörpers (7) geführt werden, so dass der Verdrängungskörper in gleitendem Kontakt mit der Dichtung (6) steht, und wobei der Verdrängungskörper (7) im Kontaktbereich in Ebenen, die parallel zur Decke (2) der Einhausung (1) liegen, einen im wesentlichen spindelförmigen Querschnitt aufweist,
**dadurch gekennzeichnet, dass** der Verdrängungskörper (7) im Schnitt normal zur Längsachse der Spindel im Kontaktbereich mit der Dichtung (6) einen im wesentlichen trapezförmigen Querschnitt aufweist, und dass bevorzugt die schrägen Trapezseiten konkav ausgebildet sind.

2. Verdrängungskörper nach Anspruch 1, **dadurch gekennzeichnet, dass** der horizontale Querschnitt in seinem mittleren Bereich im wesentlichen von zwei zueinander zumindest annähernd parallelen Abschnitten begrenzt ist und an beiden Endbereichen spitz zuläuft.

3. Verdrängungskörper nach Anspruch 2, **dadurch gekennzeichnet, dass** der Querschnitt zumindest in einem Endbereich geschwungen verläuft und dass jede der so geschwungen verlaufenden Konturen einen Wendepunkt aufweist.

4. Verdrängungskörper nach Anspruch 1, **dadurch gekennzeichnet, dass** der trapezförmige Querschnitt einen Wendepunkt aufweist.

5. Verdrängungskörper nach einem der voranstehenden Ansprüche, **dadurch gekennzeichnet, dass** er im Kontaktbereich mit der Dichtung (6) eine Verschleißplatte bzw. Verschleißleiste aufweist.

6. Verdrängungskörper nach einem der voranstehenden Ansprüche, **dadurch gekennzeichnet, dass** er an zumindest einem seiner Endbereiche eine Art Wulstbug (14) im Kontaktbereich mit der Dichtung (6) aufweist.

## Claims

1. Displacement member for suspension apparatus (4) of a transport system for loads (5) which are processed at the surface thereof in enclosed systems, the suspension apparatus being guided through a slot (8) in the cover (2) of the enclosure (1) by means of the displacement member (7), which slot (8) is provided with at least one resilient seal (6), so that the displacement member is in sliding contact with the seal (6), and the displacement member (7) having a substantially spindle-like cross-section in the contact region in planes which are parallel with the cover (2) of the enclosure (1),
**characterised in that** the displacement member (7) has a substantially trapezoidal cross-section in the section which is normal relative to the longitudinal axis of the spindle in the contact region with the seal (6), and **in that** the oblique trapezium sides are preferably constructed so as to be concave.

2. Displacement member according to claim 1, **characterised in that** the horizontal cross-section is delimited in the central region thereof substantially by two portions, which are at least substantially parallel with each other, and tapers to a point at both end regions.

3. Displacement member according to claim 2, **characterised in that** the cross-section extends in a curved manner at least in an end region and **in that** each of the contours which extend in such a curved manner has a turning point.

4. Displacement member according to claim 1, **characterised in that** the trapezoidal cross-section has a turning point.

5. Displacement member according to any one of the preceding claims, **characterised in that** it has a wear plate or wear strip in the contact region with the seal (6).

6. Displacement member according to any one of the preceding claims, **characterised in that** it has a type of bulbous projection (14) at least at one of the end regions thereof in the contact region with the seal (6).

## Revendications

1. Corps de déplacement pour nacelles suspendues (4) d'un système de transport de charges (5) subissant un traitement de surface dans des installations logées dans une enceinte, lesdites nacelles étant guidées, au moyen dudit corps de déplacement (7), à travers une fente (8) pratiquée dans le plafond (2) de l'enceinte (1) et munie d'au moins une garniture élastique d'étanchement (6), de sorte que ledit corps de déplacement est en contact glissant avec ladite garniture d'étanchement (6), ledit corps de déplacement (7) possédant une section transversale sensiblement en forme de fuseau dans la zone de contact, dans des plans situés parallèlement au plafond (2) de l'enceinte (1),
**caractérisé par le fait que** ledit corps de déplacement (7) présente, dans la zone de contact avec la garniture d'étanchement (6), une section transversale sensiblement trapézoïdale en coupe perpendiculaire à l'axe longitudinal du fuseau ; et **par le fait que** les côtés inclinés du trapèze sont réalisés, de préférence, de façon concave.

2. Corps de déplacement selon la revendication 1, **caractérisé par le fait que** la section transversale horizontale est pour l'essentiel délimitée, dans sa région centrale, par deux tronçons au moins approximativement parallèles l'un à l'autre ; et s'achève en pointe dans les deux régions extrêmes.

3. Corps de déplacement selon la revendication 2, **caractérisé par le fait que** la section transversale présente une étendue vrillée au moins dans une région extrême ; et **par le fait que** chacun des profils, à étendue ainsi vrillée, comporte un point d'inversion.

4. Corps de déplacement selon la revendication 1, **caractérisé par le fait que** la section transversale trapézoïdale présente un point d'inversion.

5. Corps de déplacement selon l'une des revendications précédentes, **caractérisé par le fait qu'**il est respectivement pourvu d'une platine d'usure ou d'un listel d'usure dans la zone de contact avec la garniture d'étanchement (6).

6. Corps de déplacement selon l'une des revendications précédentes, **caractérisé par le fait qu'**il présente, dans au moins l'une de ses régions extrêmes, une sorte de bulbe renflé (14) dans la zone de contact avec la garniture d'étanchement (6).
